Europäisches Patentamt

**European Patent Office**

Office européen des brevets

(19)

(11) Publication number: **0 097 760**
A2

# (12) EUROPEAN PATENT APPLICATION

(21) Application number: 83101637.3

(22) Date of filing: 21.02.83

(51) Int. Cl.³: **A 23 C 21/02**

(30) Priority: 28.06.82 IT 8412682

(43) Date of publication of application:
11.01.84 Bulletin 84/2

(84) Designated Contracting States:
AT BE CH DE FR GB IT LI LU NL SE

(71) Applicant: Czarnocki, Andrea
Via G. Marconi, 38
I-31032 Casale sul Sile(IT)

(72) Inventor: Czarnocki, Andrea
Via G. Marconi, 38
I-31032 Casale sul Sile(IT)

(74) Representative: Piovesana, Paolo
Corso del Popolo, 70
I-30172 Venezia-Mestre(IT)

(54) Whey based beverage and process for obtaining it.

(57) A beverage comprising whey and milk enzymes used for producing hard cheeses in an amount sufficient to provide an acidity of about 3,5 pH for the beverage. Optional flavor additives, e.g., fruit syrup may also be incorporated. The process of producing these beverages is also disclosed.

EP 0 097 760 A2

The present invention relates to a nutritious beverage and more specifically to a beverage containing whey and to a process for producing the beverages of this invention.

Whey, which is the liquid residue resulting from the curdling of milk, is well-known. At present, the use of whey for different purposes is very limited, e.g., feeding of swine, extraction of lactose, production of lactic acid, etc. Whey is also considered a waste product, for which disposal problems exist.

It has been proposed in the past to utilize whey in the formulation of a nutritious beverage, but this has not been practical because the results have not been satisfactory in view of its high acidity rate, resulting in its poor taste characteristics. In addition, intestinal dysfunctions also occur unless whey is consumed in very small quantities.

It is therefore a significant object of the present invention to provide a beverage that not only is based upon the use of whey, but which also exhibits excellent taste characteristics. A further object of the present invention is the utilization of a product that, up to now, has had no industrial significance.

According to this invention, the objects are achieved by providing a whey based beverage characterized in that it comprises whey and milk enzymes in an amount sufficient to give to the beverage an acidity of 7-2 pH, preferably of about 3,5 pH.

Another embodiment of the invention relates to a process for preparing the beverages of this invention comprising adding milk enzymes to the whey in an amount sufficient to obtain a beverage acidity of 7 to 2 pH after an incubation period of 1 to 48 hours.

Other objects, advantages and novel features of the invention will become more apparent from the following detailed description of the invention.

The beverage that is formulated in accordance with this invention contains whey. Whey is the liquid residue resulting from the curdling of milk and can be used in that form, or preferably, in a pasteurized form so as to obtain destruction of the bacterial flora present therein. Such pasteurization is carried out, for example, in a fermenting machine, at a temperature between 63° C and 68° C. At temperatures below 63° C, the destruction of at least a part of the bacterial flora, is not guaranteed. At temperatures greater than 68° C, there is a danger of flocculation of the albumin that exists.

The duration of the pasteurization treatment evidently varies, not only according to the degree of pollution of the whey, but also according to the temperature of the treatment itself. In any event, it is preferable that the pasteurization of the whey takes place for at least one hour. As an alternative to pasteurization, it may also be possible to conduct a sterilization treatment for the whey, for example, with a conventional actinizer in accordance with

- 3 -

0097760

this invention.

According to the present invention, the beverage comprises at least one milk enzyme used in the manufacture of hard cheeses. These milk enzymes are added to the preferably pasteurized or sterilized whey. Particularly preferred milk enzymes used in the practice of this invention are selected from the group consisting of:

(1) thermophilous lactobacilli (e.g., lattobacillus bulgaricus, lattobacillus helveticus);

(2) mesophilous lactobacilli (e.g., lattobacillus acidophilus);

(3) lactic termophilous homofermenting streptococci (e.g., streptococchus termophilus); and

(4) heterofermenting mesophilous streptococci (e.g., leuconostoc citrovorum and leuconostoc dextranicum).

The amount of such enzymes present is an amount sufficient to impart to the beverage an acidity in the range of 7 to 2 pH and preferably an acidity about 3,5 pH. Generally, the amount of enzyme present is 2% by volume with respect to the volume of whey, although somewhat higher or lower percentages can be used such that a useful range is between 1 and 5%. It is also possible to vary other parameters of the incubation step. In particular, the period of incubation can vary from 1 to 48 hours, and, under these same conditions, the greater the period of time for the incubation, a correspondingly higher degree of acidity is exhibited for the product obtained thereby. The temperature of the whey during the incubation step is maintained at a value of between 40° C and 63° C with best results being obtained at a temperature of 50° C. Thus, controlling such parameters as the quantitative amount of milk enzymes, incubation period and temperature, a product can be obtained that exhibits an acidity from 7 to 2 pH.

When the parameters discussed hereinbefore are followed, in accordance with this embodiment of the invention, so that the acidity of the resulting beverage is about 3-5 pH, a beverage is produced that exhibits a yellow opalescent color and also exhibits an acidulous and lightly salty taste. According to the particular milk enzymes used, such a beverage may or may not develop carbon dioxide and therefore, the resulting beverage may be fizzy or not fizzy. In any event, the beverage is refreshing, has an agreeable taste, energetic due to the protein of the whey and milk enzymes, and it has a regenerative activity on the intestinal flora despite the high acidity of the gastric juices.

The product, according to the invention, is preferably drunk cold, within two or three days after having been produced. Moreover, it may be desired to preserve the beverage for longer periods of time than the approximate two to three days shelf-life. In accordance with this invention, the beverage produced herein can be subjected to a further step of pasteurization, with the object of partially destroying the bacterial content thereof or for the purpose of sterilization with the object of destroying the bacterial content of the beverage completely. Generally, the beverages of this invention are preservable for a period of time up to about 40 days at temperatures of 4-8° C, but can last for periods of several months, even at room temperature when the beverages are subjected to an additional pasteurization or sterilization step as discussed hereinbefore.

Naturally, the sterilized product, which does not contain bacterial flora, cannot regenerate the intestinal flora.

In order to modify the taste characteristics of the beverage, it may be desired to incorporate a flavoring or aroma agent into said beverage. Particularly preferred flavoring agents are aromatic substances, especially fruit syrups. The amount of such flavoring agents to be added is governed by the intensity of the flavor of the component added and is generally between 5 and 40 parts flavoring agent to 100 parts of whey, on a volume to volume basis, for fruit syrups.

It may also be desired to add preservatives to the beverages of this invention. Examples of suitable preservatives for the fruit syrup flavoring include, for example, sodium benzoate or preferably, potassium sorbite, in an amount of about 0.5 g/l., based on the total amount of fruit syrup to be added to the beverage.

- 6 -

The following example will further clarify and illustrate the invention.

Fifty litres of whey have been pasteurized in a fermenting machine at 68° C for one hour. The product was then cooled to 50° C and 0.5 litres of milk enzymes for hard cheeses were added to the whey. The mixture was then left to incubate for 15 hours, so as to obtain a product exhibiting an acidity of 3,5 pH. This product was repasteurized for 40 minutes at 68° C and, finally, 9 litres of orange syrup containing a normal quantity of potassium sorbite were added.

CLAIMS

1.      A whey based beverage comprising whey and milk enzymes in an amount sufficient to give to the beverage an acidity of 7-2 pH, preferably of about 3,5 pH.

2.      Beverage according to Claim 1 characterized in that the milk enzymes are of the type for hard chesses.

3.      · Beverage according to Claims 1 or 2 characterized in that the said milk enzymes are selected from the group consisting of:

·(1) thermophilous lactobacilli;

(2) mesophilous lactobacilli;

(3) lactic termophilous homofermenting streptococci; and

(4) heterofermenting mesophilous cocci.

4.      Beverage according to Claim 3 characterized in that said thermophiious lactobacilli are lattobacillus bulgaricus or lattobacillus helveticus, said mesophilous lactobacilli are lattobacillus acidophilus, said lactic termophilous homofermenting streptococci are streptococcus thermophilus, and said heterofermenting mesophilus cocci are leuconostoc citrovorum or leuconostoc dextranicum.

5.      Beverage according to Claim 1 characterized in that it further comprises an aromatic flavoring substances.

6.      Beverage according to Claim 1 characterized in that it further comprises 5 to 40 parts fruit syrup to 100 parts of whey on a volume basis.

7.     Beverage according to Claim 1 characterized in that it further comprises at least one preservative, preferably potassium sorbite or sodium benzoate.

8.     A process for preparing the beverage of Claim 1 characterized in that it comprises adding milk enzymes to the whey in an amount sufficient to obtain, after an incubation period of 1-48 hours at a temperature of 40-63° C an acidity of 7 to 2 pH.

9.     A process according to Claim 8 characterized in that the milk enzymes are of the type for producing hard cheeses.

10.     A process according to Claim 8 characterized in that it comprises initially pasteurizing the whey at a temperature of 63-68° C for at least one hour prior to the addition of said milk enzymes.

11.     A process according to Claim 8 characterized in that it comprises initially sterilizing the whey prior to the addition of said milk enzymes.

12.     A process according to Claim 8 characterized in that it further comprises an additional step of pasteurization following incubation so as to reduce or destroy the bacterial content of said beverage.

13.     A process according to Claim 8 characterized in that it further comprises adding flavoring or aroma to said beverage.

14.     A process according to Claim 8 characterized in that it comprises adding 5-40 parts fruit syrup per 100 parts of whey on a volume basis to the beverage.

15.        A process according to Claim 8 characterized in that it further comprises adding preservatives to said beverage.